# EUROPEAN PATENT APPLICATION

(11) **EP 4 510 297 A1**
(43) Date of publication of application: **19.02.2025**
(21) Application number: 22943007.9
(22) Date of filing: 23.05.2022
(51) Int. Cl.: H01M 10/44

(54) **BATTERY CELL EQUALIZATION METHOD AND APPARATUS, ELECTRONIC DEVICE AND STORAGE MEDIUM**

(71) Applicant: Contemporary Amperex Technology Co., Limited, Ningde, Fujian 352100 (CN)
(72) Inventor: ZHOU, Meijuan, Ningde, Fujian 352100 (CN); PENG, Lei, Ningde, Fujian 352100 (CN); WANG, Wenqian, Ningde, Fujian 352100 (CN); ZHANG, Shichang, Ningde, Fujian 352100 (CN)
(74) Representative: Ran, Handong
(86) International application number: PCT/CN2022/094467
(87) International publication number: WO 2023/225795

(57) **Abstract**

The present application relates to a battery cell equalization method and apparatus, an electronic device and a storage medium. The method comprises: performing charging and discharging operations on battery cells in an energy storage system, and determining a first battery cell which firstly reaches a discharging cut-off voltage in the discharging operation, and a second battery cell which firstly reaches a charging cut-off voltage in the charging operation; and if the first battery cell is different from the second battery cell, performing equalization processing on the battery cells in the energy storage system. By using the present application, the power of a battery cell having a minimum capacity and the total capacity of the energy storage system can be fully utilized.

## Description

### TECHNICAL FIELD

This application relates to the technical field of battery cells, and in particular, to a cell balancing method and apparatus, an electronic device, and a storage medium.

### BACKGROUND

With the rapid development of new energy technology, energy storage systems have become one of important research topics in the field of new energy. An energy storage system includes a plurality of battery cells. A difference in capacity may exist between the battery cells, and a battery cell with the lowest capacity exists.

Normally, when one battery cell in an energy storage system reaches a charge cut-off voltage, all battery cells in the energy storage system stop charging. When one battery cell reaches a discharge cut-off voltage, all battery cells in the energy storage system stop discharging. In a case that other battery cells reach the charge cut-off voltage first but the battery cell with the lowest capacity has not reached the charge cut-off voltage, the battery cell with the lowest capacity is not fully charged. Afterward, the electrical power that can be released by the lowest-capacity battery cell during discharge is lower than a rated capacity of the battery cell, thereby resulting in insufficient utilization of a total capacity of the energy storage system.

### SUMMARY

In view of the above problems, this application provides cell balancing method and apparatus, an electronic device, and a storage medium to fully utilize the state of charge of a lowest-capacity battery cell and a total capacity of the energy storage system.

According to a first aspect, this application provides a cell balancing method. The method includes: performing charge and discharge operations on battery cells in an energy storage system, and determining a first battery cell that first reaches a discharge cut-off voltage during the discharge operation, and a second battery cell that first reaches a charge cut-off voltage during the charge operation; and performing a balancing process on the battery cells in the energy storage system in a case that the first battery cell is different from the second battery cell.

In the technical solution in this embodiment of this application, if the first battery cell that first reaches the discharge cut-off voltage is different from the second battery cell that first reaches the charge cut-off voltage, it is determined that the battery cell that first reaches the charge cut-off voltage is not a lowest-capacity battery cell. In this case, it is necessary to balance the battery cells in the energy storage system. After the balancing, the battery cell that first reaches the charge cut-off voltage is made to be the lowest-capacity battery cell, thereby fully utilizing the capacity of the lowest-capacity battery cell, and in turn, fully utilizing the total capacity of the energy storage system.

In some embodiments, the method further includes: in a case that the first battery cell is identical to the second battery cell, determining that the battery cells in the energy storage system reach a balanced state, or stopping the balancing process on the battery cells in the energy storage system.

In the technical solution in this embodiment of this application, after it is determined that a balanced state is reached or after the balancing process is stopped, the lowest-capacity battery cell can be fully charged. In this way, the capacity of the lowest-capacity battery cell can be fully utilized, and in turn, the total capacity of the energy storage system can be fully utilized.

In some embodiments, the performing a balancing process on the battery cells in the energy storage system includes: determining a target battery cell that meets a balancing condition in the energy storage system; and performing the balancing process on the target battery cell.

In the technical solution in this embodiment of this application, the target battery cell is determined based on the balancing condition, thereby enabling targeted balancing and improving the balancing efficiency.

In some embodiments, after performing the balancing process on the target battery cell, the method further includes: performing charge and discharge operations on the battery cells in the energy storage system, and determining a third battery cell that first reaches the discharge cut-off voltage during the discharge operation, and a fourth battery cell that first reaches the charge cut-off voltage during the charge operation; and in a case that the third battery cell is identical to the fourth battery cell, determining that the battery cells in the energy storage system reach a balanced state, or stopping the balancing process on the battery cells in the energy storage system.

In the technical solution in this embodiment of this application, the balancing process is stopped after it is determined that the battery cell that first reaches the discharge cut-off voltage and the battery cell that first reaches the charge cut-off voltage are the lowest-capacity battery cells, so that the lowest-capacity battery cell can be fully charged after the balancing. In this way, the capacity of the lowest-capacity battery cell can be fully utilized, and in turn, the total capacity of the energy storage system can be fully utilized.

In some embodiments, the determining a target battery cell that meets a balancing condition in the energy storage system includes: obtaining a cell voltage of each battery cell, and a cell voltage difference between each battery cell and the first battery cell; and determining that a battery cell meeting a condition is the target battery cell, where the condition is: the cell voltage is greater than a first voltage threshold, and the cell voltage difference is greater than a second voltage threshold.

In the technical solution in this embodiment of this application, the target battery cell to be balanced can be accurately and quickly determined based on the first voltage threshold and the second voltage threshold, thereby improving the balancing efficiency.

In some embodiments, the first voltage threshold is determined based on the charge cut-off voltage of the energy storage system, and the second voltage threshold is determined based on a maximum allowable voltage difference between the battery cells of the energy storage system.

In some embodiments, the performing the balancing process on the target battery cell includes: determining a target discharge duration based on a preset discharge amount; and discharging the target battery cell based on the target discharge duration.

In the technical solution in this embodiment of this application, by determining the target discharge duration, the discharge process of the target battery cell can be quantified, thereby making it easier to control the balancing process on the target battery cell.

In some embodiments, the discharging the target battery cell based on the target discharge duration includes: discharging the target battery cell by using a balancing circuit disposed in the energy storage system, and starting timing from a beginning of the discharge; and stopping discharging the target battery cell when a duration of the timing reaches the target discharge duration.

In the technical solution in this embodiment of this application, the balancing process can be easily implemented by using the balancing circuit.

According to a second aspect, this application further provides a cell balancing apparatus. The apparatus includes:
a first cell determining module, configured to perform charge and discharge operations on battery cells in an energy storage system, and determine a first battery cell that first reaches a discharge cut-off voltage during the discharge operation, and a second battery cell that first reaches a charge cut-off voltage during the charge operation; and
a balancing module, configured to perform a balancing process on the battery cells in the energy storage system in a case that the first battery cell is different from the second battery cell.

In some embodiments of this application, the balancing module is specifically configured to: determine a target battery cell that meets a balancing condition in the energy storage system; and perform the balancing process on the target battery cell.

In some embodiments of this application, the apparatus further includes:
a first balancing stopping module, configured to , in a case that the first battery cell is identical to the second battery cell, determine that the battery cells in the energy storage system reach a balanced state, or stop the balancing process on the battery cells in the energy storage system.

In some embodiments of this application, the apparatus further includes:
a second cell determining module, configured to perform charge and discharge operations on the battery cells in the energy storage system, and determine a third battery cell that first reaches the discharge cut-off voltage during the discharge operation, and a fourth battery cell that first reaches the charge cut-off voltage during the charge operation; and
a second balancing stopping module, configured to in a case that the third battery cell is identical to the fourth battery cell, determine that the battery cells in the energy storage system reach a balanced state, or stop the balancing process on the battery cells in the energy storage system.

In some embodiments of this application, the balancing module is specifically configured to: obtain a cell voltage of each battery cell, and a cell voltage difference between each battery cell and the first battery cell; and determine that a battery cell meeting a condition is the target battery cell, where the condition is: the cell voltage is greater than a first voltage threshold, and the cell voltage difference is greater than a second voltage threshold.

In some embodiments of this application, the first voltage threshold is determined based on the charge cut-off voltage of the energy storage system, and the second voltage threshold is determined based on a maximum allowable voltage difference between the battery cells of the energy storage system.

In some embodiments of this application, the balancing module is specifically configured to: determine a target discharge duration based on a preset discharge amount; and discharge the target battery cell based on the target discharge duration.

In some embodiments of this application, the balancing module is specifically configured to: discharge the target battery cell by using a balancing circuit disposed in the energy storage system, and start timing from a beginning of the discharge; and stopping discharging the target battery cell when a duration of the timing reaches the target discharge duration.

According to a third aspect, this application further provides an electronic device, including a memory, a processor, and a computer program stored in the memory and executable on the processor. When executing the computer program, the processor implements the method disclosed in the first aspect above.

According to a fourth aspect, an embodiment of this application provides a computer-readable storage medium on which a computer program is stored. When executed by a processor, the computer program implements the method disclosed in the first aspect above.

According to a fifth aspect, an embodiment of this application provides a computer program product, including a computer program. When executed by a processor, the computer program implements the method disclosed in the first aspect above.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

By reading the following detailed description of optional embodiments, a person of ordinary skill in the art becomes clearly aware of various other advantages and benefits. The drawings are merely intended to illustrate the optional embodiments, but not to limit this application. In all the drawings, the same reference numeral represents the same component. In the drawings:
FIG. 1 is a schematic flowchart of a cell balancing method according to some embodiments of this application;
FIG. 2 is a schematic flowchart of a cell balancing method according to some embodiments of this application;
FIG. 3 is a schematic flowchart of performing a balancing process on battery cells in an energy storage system according to some embodiments of this application;
FIG. 4 is a schematic flowchart of performing a balancing process on a target battery cell according to some embodiments of this application;
FIG. 5 is a schematic flowchart of a cell balancing method according to some embodiments of this application;
FIG. 6 is a structural block diagram of a cell balancing apparatus according to some embodiments of this application;
FIG. 7 is a structural block diagram of a cell balancing apparatus according to some embodiments of this application;
FIG. 8 is a structural block diagram of a cell balancing apparatus according to some embodiments of this application; and
FIG. 9 is an internal structure diagram of an electronic device according to some embodiments of this application.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of this application, unless otherwise expressly specified and defined, the technical terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art can understand the specific meanings of the terms in some embodiments of this application according to specific situations.

Currently, energy storage systems have become one of important research topics in the field of new energy. An energy storage system includes a plurality of battery cells. A difference in capacity may exist between the battery cells, and a battery cell with the lowest capacity exists. Normally, when one battery cell in an energy storage system reaches a charge cut-off voltage, all battery cells in the energy storage system stop charging. When one battery cell reaches a discharge cut-off voltage, all battery cells in the energy storage system stop discharging. In a case that other battery cells reach the charge cut-off voltage first but the battery cell with the lowest capacity has not reached the charge cut-off voltage, the battery cell with the lowest capacity is not fully charged. Afterward, the electrical power that can be released by the lowest-capacity battery cell during discharge is lower than a rated capacity of the battery cell, thereby resulting in insufficient utilization of a total capacity of the energy storage system.

In the cell balancing scheme provided in this embodiment of this application, charge and discharge operations are performed on the battery cells in the energy storage system, and the first battery cell that first reaches the discharge cut-off voltage during the discharge operation and the second battery cell that first reaches the charge cut-off voltage during the charge operation are determined. A balancing process is performed on the battery cells in the energy storage system in the case that the first battery cell is different from the second battery cell. In this embodiment of this application, if the first battery cell that first reaches the discharge cut-off voltage is different from the second battery cell that first reaches the charge cut-off voltage, it is determined that the battery cell that first reaches the charge cut-off voltage is not a lowest-capacity battery cell. In this case, it is necessary to balance the battery cells in the energy storage system. After the balancing, the battery cell that first reaches the charge cut-off voltage is made to be the lowest-capacity battery cell, thereby fully utilizing the capacity of the lowest-capacity battery cell, and in turn, fully utilizing the total capacity of the energy storage system.

The battery cell and the energy storage system disclosed in embodiments of this application are applicable to, but not limited to use in, electrical devices such as vehicles, watercraft, or aircraft, so as to provide electrical energy for the electrical devices. In addition, the battery cell and the energy storage system disclosed in embodiments of this application may be connected to a power grid to output the stored electrical energy to the power grid.

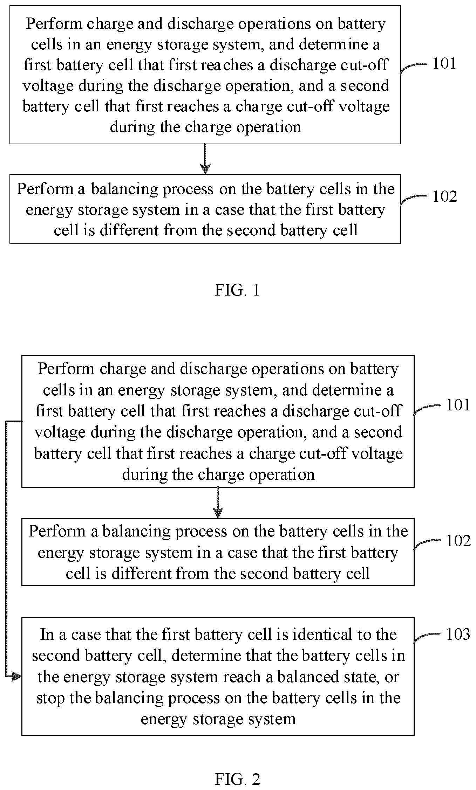

According to some embodiments of this application, referring to FIG. 1, a cell balancing method is provided. Using an example in which the method is applied to an energy storage system, the method may include the following steps:

Step 101: Perform charge and discharge operations on battery cells in an energy storage system, and determine a first battery cell that first reaches a discharge cut-off voltage during the discharge operation, and a second battery cell that first reaches a charge cut-off voltage during the charge operation.

The energy storage system includes a plurality of battery cells. The battery cells in the energy storage system are discharged. When one of the battery cells reaches the discharge cut-off voltage first, the discharge operation for all the battery cells is stopped. Afterward, the first battery cell that first reaches the discharge cut-off voltage is recorded.

The battery cells in the energy storage system are charged. When one of the battery cells reaches the charge cut-off voltage first, the charge operation for all the battery cells is stopped. Afterward, the second battery cell that first reaches the charge cut-off voltage is recorded.

For example, after the discharge operation, the first battery cell that first reaches the discharge cut-off voltage is a battery cell A; and, after the charge operation, the second battery cell that first reaches the charge cut-off voltage is a battery cell B.

It is worth noting that the embodiments of this application do not limit the order between the charge operation and the discharge operation included in the charge and discharge operations. For example, the charge operation may be performed before the discharge operation, or the discharge operation may be performed before the charge operation.

Step 102: Perform a balancing process on the battery cells in the energy storage system in a case that the first battery cell is different from the second battery cell.

Whether the first battery cell and the second battery cell are the same battery cell is determined. If the first battery cell and the second battery cell are not the same battery cell, it indicates that the battery cell that first reaches the discharge cut-off voltage and the battery cell that first reaches the charge cut-off voltage are not the lowest-capacity battery cell. In this case, the lowest-capacity battery cell has not been fully charged when another battery cell reaches the charge cut-off voltage first during the charge operation. Afterward, the electrical power that can be released by the lowest-capacity battery cell during discharge is lower than a rated capacity of the battery cell. After the lowest-capacity battery cell completes discharging first, other battery cells also stop discharging, thereby resulting in insufficient utilization of the total capacity of the energy storage system. Therefore, it is necessary to balance the battery cells in the energy storage system. After the balancing, the battery cell that first reaches the charge cut-off voltage is made to be the lowest-capacity battery cell, thereby fully utilizing the capacity of the lowest-capacity battery cell, prolonging the discharge duration, and in turn, fully utilizing the total capacity of the energy storage system.

In the cell balancing method above, charge and discharge operations are performed on the battery cells in the energy storage system, and the first battery cell that first reaches the discharge cut-off voltage during the discharge operation and the second battery cell that first reaches the charge cut-off voltage during the charge operation are determined. A balancing process is performed on the battery cells in the energy storage system in the case that the first battery cell is different from the second battery cell. In this embodiment of this application, when it is determined that the battery cell that first reaches the charge cut-off voltage is not the lowest-capacity battery cell, the battery cells in the energy storage system are balanced. After the balancing, the battery cell that first reaches the charge cut-off voltage is made to be the lowest-capacity battery cell, thereby fully utilizing the capacity of the lowest-capacity battery cell, and in turn, fully utilizing the total capacity of the energy storage system.

According to some embodiments of this application, as shown in FIG. 2, the method of this application may further include the following step:

Step 103: In a case that the first battery cell is identical to the second battery cell, determine that the battery cells in the energy storage system reach a balanced state, or stop the balancing process on the battery cells in the energy storage system.

If the first battery cell and the second battery cell are the same battery cell, it indicates that both the battery cell that first reaches the discharge cut-off voltage and the battery cell that first reaches the charge cut-off voltage are the lowest-capacity battery cell. In this case, the lowest-capacity battery cell can be fully charged, and the capacity of the lowest-capacity battery cell can be fully utilized during discharge, and in turn, the total capacity of the energy storage system can be fully utilized. In this case, it is determined that the battery cells in the energy storage system reach a balanced state, or the balancing process on the battery cells in the energy storage system is stopped.

In the above embodiment, in the case that the first battery cell is identical to the second battery cell, it is determined that the battery cells in the energy storage system reach a balanced state, or the balancing process on the battery cells in the energy storage system is stopped. After the balancing, the lowest-capacity battery cell can be fully charged. In this way, the capacity of the lowest-capacity battery cell can be fully utilized, and in turn, the total capacity of the energy storage system can be fully utilized.

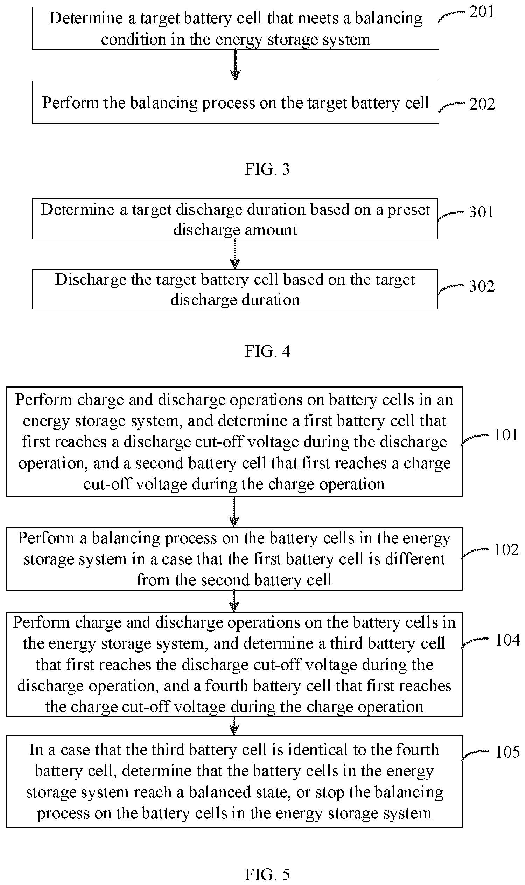

According to some embodiments of this application, as shown in FIG. 3, the balancing process on battery cells in the energy storage system may include the following steps:

Step 201: Determine a target battery cell that meets a balancing condition in the energy storage system.

In balancing the battery cells in the energy storage system, the battery cells are searched based on the preset balancing condition to find the target cell that meets the balancing condition.

In some embodiments of this application, the process of determining a target battery cell that meets a balancing condition in the energy storage system may include: obtaining a cell voltage of each battery cell, and a cell voltage difference between each battery cell and the first battery cell; and determining that a battery cell meeting a condition is the target battery cell, where the condition is: the cell voltage is greater than a first voltage threshold, and the cell voltage difference is greater than a second voltage threshold.

The energy storage system may obtain the cell voltage of each battery cell and calculate the cell voltage difference between each battery cell and the first battery cell. If the cell voltage of the battery cell is greater than the first voltage threshold and the cell voltage difference is greater than the second voltage threshold, it is determined that this battery cell is a target battery cell to be balanced.

For example, the first voltage threshold is 4.2 V, the second voltage threshold is 60 mV, the first battery cell is the battery cell A, the cell voltage of the battery cell A obtained by the energy storage system is 4.21 V, and the cell voltage of the battery cell B is 4.22 V. It can be calculated that the cell voltage difference between the battery cell B and the battery cell A is 100 mV. Therefore, it is determined that the cell voltage of the battery cell B is greater than the first voltage threshold, and the cell voltage difference is greater than the second voltage threshold, and in turn, it is determined that the battery cell B is the target battery cell to be balanced.

The cell voltage of each battery cell may include the cell voltage of the first battery cell, or may exclude the cell voltage of the first battery cell. This is not limited in this embodiment of this application.

The first voltage threshold is determined based on the charging cut-off voltage of the energy storage system. For example, if the charge cut-off voltage is 4.3 V, then the first voltage threshold may be set to 4.2 V. The first voltage threshold is not limited in this embodiment of this application.

The second voltage threshold is determined based on a maximum allowable voltage difference between the battery cells of the energy storage system. For example, if the maximum allowable voltage difference between the battery cells of the energy storage system is 60 mV, then the second voltage threshold may be set to 60 mV. The second voltage threshold is not limited in this embodiment of this application.

Understandably, the target battery cell to be balanced can be accurately and quickly determined based on the first voltage threshold and the second voltage threshold, thereby improving the balancing efficiency.

Step 202: Perform the balancing process on the target battery cell.

After determining the target battery cell, the energy storage system performs a balancing process on the target battery cell to reduce the cell voltage of the target battery cell.

For example, when determining that the target cells include a battery cell B and a battery cell C, the energy storage system performs a balancing process on the battery cell B and the battery cell C separately.

In the above embodiment, the target battery cell that meets a balancing condition in the energy storage system is determined, and a balancing process is performed on the target battery cell. In this embodiment of this application, the target battery cell is determined based on the balancing condition, thereby enabling targeted balancing and improving the balancing efficiency.

According to some embodiments of this application, as shown in FIG. 4, the above step of performing a balancing process on the target battery cell may include the following steps:

Step 301: Determine a target discharge duration based on a preset discharge amount.

The energy storage system may obtain a preset discharge amount first. For example, the preset discharge amount is 5% of the capacity of the battery cell. The preset discharge amount is not limited herein.

When performing a balancing process on the target cell, the energy storage system determines a duration required to discharge the target cell by the preset discharge amount, so as to obtain a target discharge duration. For example, if it takes a time of t to reduce the state of charge of the target cell by 5% during discharge of the target cell, then it is determined that the target discharge duration is t.

Step 302: Discharge the target battery cell based on the target discharge duration.

After the target discharge duration is determined, the target battery cell is discharged based on the target discharge duration.

In some embodiments of this application, the step of discharging the target battery cell based on the target discharge duration includes: discharging the target battery cell by using a balancing circuit disposed in the energy storage system, and starting timing from a beginning of the discharge; and stopping discharging the target battery cell when a duration of the timing reaches the target discharge duration.

The energy storage system may be provided with a balancing circuit. When the target cell is discharged, the balancing circuit is used for discharging the target cell. In addition, timing starts from the discharge. When a duration of the timing reaches the target discharge duration, the energy storage system stops discharging the target battery cell.

The balancing circuit may include a balancing resistor. The balancing circuit is not limited herein. Understandably, the balancing process can be easily implemented by using the balancing circuit.

In the above embodiment, the target discharge duration is determined based on the preset discharge amount, and the target battery cell is discharged based on the target discharge duration. In this embodiment of this application, by determining the target discharge duration, the discharge process of the target battery cell can be quantified, thereby making it easier to control the balancing process on the target battery cell.

According to some embodiments of this application, as shown in FIG. 5, the method of this application may further include the following step:

Step 104: Perform charge and discharge operations on the battery cells in the energy storage system, and determine a third battery cell that first reaches the discharge cut-off voltage during the discharge operation, and a fourth battery cell that first reaches the charge cut-off voltage during the charge operation.

After balancing the target battery cells, the energy storage system performs charge and discharge operations on the battery cells again. After the discharge operation is performed on the battery cells in the energy storage system, the third battery cell that first reaches the discharge cut-off voltage is recorded. After the charge operation is performed on the battery cells in the energy storage system, the fourth battery cell that first reaches the charge cut-off voltage is recorded.

Whether the third battery cell and the fourth battery cell are the same battery cell is determined. If the third battery cell and the fourth battery cell are not the same battery cell, the battery cells in the energy storage system are balanced again.

For example, after the discharge operation, the third battery cell that first reaches the discharge cut-off voltage is a battery cell A; and, after the charge operation, the fourth battery cell that first reaches the charge cut-off voltage is a battery cell C. In this case, the battery cells in the energy storage system are balanced again.

Step 105: In a case that the third battery cell is identical to the fourth battery cell, determine that the battery cells in the energy storage system reach a balanced state, or stop the balancing process on the battery cells in the energy storage system.

If the third battery cell and the fourth battery cell are the same battery cell, it indicates that both the battery cell that first reaches the discharge cut-off voltage and the battery cell that first reaches the charge cut-off voltage are the lowest-capacity battery cell. In this case, the lowest-capacity battery cell can be fully charged, and the capacity of the lowest-capacity battery cell can be fully utilized during discharge, and in turn, the total capacity of the energy storage system can be fully utilized. In this case, it is determined that the battery cells in the energy storage system reach a balanced state, or the balancing process on the battery cells in the energy storage system is stopped.

In the above embodiment, the charge and discharge operations are performed on the battery cells in the energy storage system, the third battery cell that first reaches the discharge cut-off voltage during the discharge operation is determined, and the fourth battery cell that first reaches the charge cut-off voltage during the charge operation is determined. In the case that the third battery cell is identical to the fourth battery cell, it is determined that the battery cells in the energy storage system reach a balanced state, or the balancing process on the battery cells in the energy storage system is stopped. In this embodiment of this application, the balancing process is stopped after it is determined that the battery cell that first reaches the discharge cut-off voltage and the battery cell that first reaches the charge cut-off voltage are the lowest-capacity battery cells, so that the lowest-capacity battery cell can be fully charged after the balancing. In this way, the capacity of the lowest-capacity battery cell can be fully utilized, and in turn, the total capacity of the energy storage system can be fully utilized.

Understandably, although the steps in the flowchart are sequentially displayed as indicated by arrows, the steps are not necessarily performed in the order indicated by the arrows. Unless otherwise expressly specified herein, the order of performing the steps is not strictly limited, and the steps may be performed in other order. Moreover, at least a part of the steps in the flowchart may include a plurality of substeps or stages. The substeps or stages are not necessarily performed at the same time, but may be performed at different times. The substeps or stages are not necessarily performed sequentially, but may take turns with or alternate with other steps or at least a part of substeps or stages of other steps.

Based on the same inventive concept, an embodiment of this application further provides a cell balancing apparatus for implementing the cell balancing method disclosed above. The technical solution of this apparatus to solve the problems is similar to the technical solution described in the above method. Therefore, the specific definitions in one or more embodiments of the cell balancing apparatus provided below may be learned with reference to the above definitions for the cell balancing method, the details of which are omitted here.

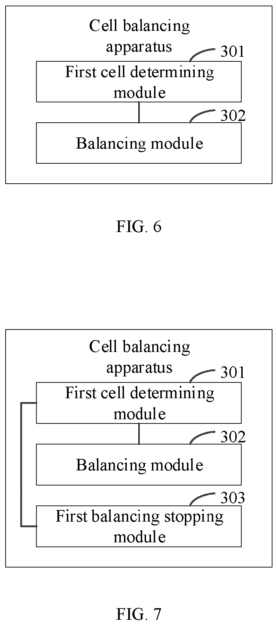

According to some embodiments of this application, as shown in FIG. 6, a cell balancing apparatus is provided. The apparatus includes:
a first cell determining module 301, configured to perform charge and discharge operations on battery cells in an energy storage system, and determine a first battery cell that first reaches a discharge cut-off voltage during the discharge operation, and a second battery cell that first reaches a charge cut-off voltage during the charge operation; and
a balancing module 302, configured to perform a balancing process on the battery cells in the energy storage system in a case that the first battery cell is different from the second battery cell.

In some embodiments of this application, the balancing module 302 is specifically configured to: determine a target battery cell that meets a balancing condition in the energy storage system; and perform the balancing process on the target battery cell.

In some embodiments of this application, as shown in FIG. 7, the apparatus further includes:
a first balancing stopping module 303, configured to in a case that the first battery cell is identical to the second battery cell, determine that the battery cells in the energy storage system reach a balanced state, or stop the balancing process on the battery cells in the energy storage system.

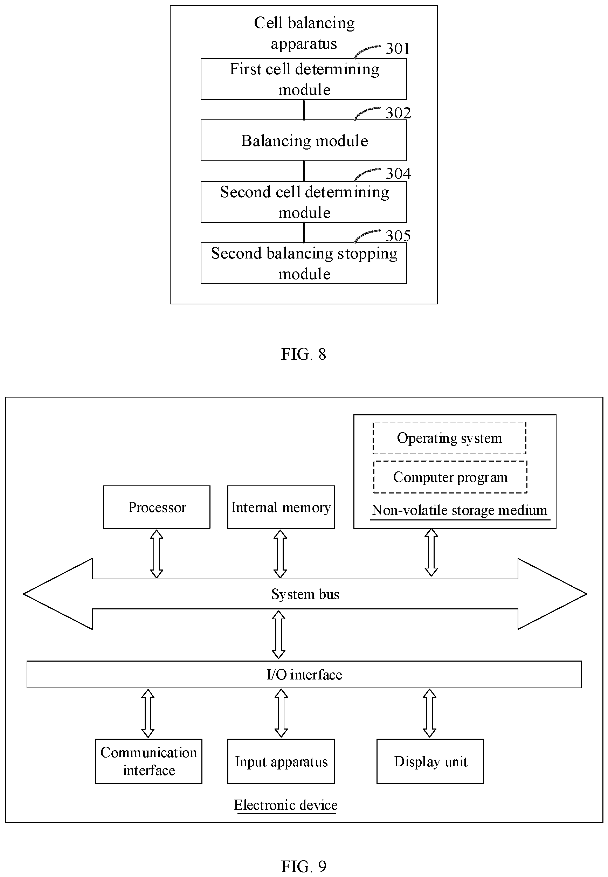

In some embodiments of this application, as shown in FIG. 8, the apparatus further includes:
a second cell determining module 304, configured to perform charge and discharge operations on the battery cells in the energy storage system, and determine a third battery cell that first reaches the discharge cut-off voltage during the discharge operation, and a fourth battery cell that first reaches the charge cut-off voltage during the charge operation; and
a second balancing stopping module 305, configured to in a case that the third battery cell is identical to the fourth battery cell, determine that the battery cells in the energy storage system reach a balanced state, or stop the balancing process on the battery cells in the energy storage system.

In some embodiments of this application, the balancing module 302 is specifically configured to: obtain a cell voltage of each battery cell, and a cell voltage difference between each battery cell and the first battery cell; and determine that a battery cell meeting a condition is the target battery cell, where the condition is: the cell voltage is greater than a first voltage threshold, and the cell voltage difference is greater than a second voltage threshold.

In some embodiments of this application, the first voltage threshold is determined based on the charge cut-off voltage of the energy storage system, and the second voltage threshold is determined based on a maximum allowable voltage difference between the battery cells of the energy storage system.

In some embodiments of this application, the balancing module 302 is specifically configured to: determine a target discharge duration based on a preset discharge amount; and discharge the target battery cell based on the target discharge duration.

In some embodiments of this application, the balancing module 302 is specifically configured to: discharge the target battery cell by using a balancing circuit disposed in the energy storage system, and start timing from a beginning of the discharge; and stopping discharging the target battery cell when a duration of the timing reaches the target discharge duration.

For specific definitions on the cell balancing apparatus, reference may be made to the above definitions on the cell balancing method, details of which are omitted here. The modules in the cell balancing apparatus may be implemented fully or partly by software, hardware, or a combination thereof. The modules may be built in, or independent of, a processor of an electronic device in hardware form, or may be stored in a memory of the electronic device in software form, so as to be invoked by the processor to perform the corresponding operations.

According to some embodiments of this application, an electronic device is provided. The internal structure diagram of the electronic device may be shown in FIG. 9. The computer device includes a processor, a memory, a communications interface, a display screen, and an input apparatus that are connected by a system bus. The processor of the computer device is configured to provide computing and control capabilities. The memory of the computer device includes a non-volatile storage medium, and an internal memory. The non-volatile storage medium stores an operating system and a computer program. The internal memory provides an environment for operation of an operating system and a computer program in the non-volatile storage medium. The communications interface of the computer device is configured to communicate with an external terminal in a wired or wireless manner. The wireless communication may be implemented by WIFI, a mobile cellular network, Near Field Communication (NFC), or other technologies. When executed by a processor, the computer program implements the cell balancing method. The display screen of the computer device may be a liquid crystal display or an electronic ink display screen. The input device of the computer device may be a touch layer that overlays the display screen, or may be a key, a trackball, or a touchpad disposed on the chassis of the computer device, or may be an external keyboard, touchpad or mouse or the like.

A person skilled in the art understands that the structure shown in FIG. 9 is a block diagram of just a part of the structure related to the solution of this application, and does not constitute any limitation on the computer device to which the solution of this application is applied. A specific computer device may include more or fewer components than those shown in the drawings, or may include a combination of some of the components, or may arrange the components in a different way.

Some embodiments of this application further provide a non-transitory computer-readable storage medium containing an instruction, for example, a memory containing an instruction, where the instruction may be executed by a processor of an electronic device to perform the above method. For example, the non-transitory computer-readable storage medium may be a ROM, a random access memory (RAM), a CD-ROM, a magnetic tape, a floppy disk, an optical data storage device, or the like.

Some embodiments of this application further provide a computer program product. The computer program product includes a computer program. When executed by a processor, the computer program can implement the above method. The computer program product includes one or more computer instructions. When loaded and executed on a computer, the computer instructions can implement part or all of the above method based on all or part of the processes or functions described in an embodiment of this application.

A person of ordinary skill in the art may understand that all or some of the processes of the methods in the foregoing embodiments may be implemented by a computer program instructing relevant hardware. The computer program may be stored in a nonvolatile computer-readable storage medium. When executed, the computer program can perform processes that include the foregoing method embodiments. Any reference to a memory, storage, a database, or another medium used in any embodiment of this application may include at least one of a non-volatile memory or a volatile memory. The non-volatile memory may include a read-only memory (ROM), a magnetic tape, a floppy disk, a flash memory, an optical memory, or the like. The volatile memory may include a random access memory (RAM) or an external cache. Illustratively rather than restrictively, the RAM is in diverse forms, such as a static random access memory (SRAM) or a dynamic random access memory (DRAM).

The technical features in the foregoing embodiments may be combined arbitrarily. For brevity, not all possible combinations of the technical features in the embodiments are described. However, to the extent that no conflict exists, all such combinations of the technical features are considered falling within the scope hereof.

The foregoing embodiments are merely several exemplary embodiments of this application to facilitate a detailed understanding of the technical solutions hereof, but are not to be understood as any limitation on the patent protection scope hereof. It is hereby noted that several variations and improvements, which may be made to the embodiments by a person of ordinary skill in the art without departing from the concept of this application, fall within the protection scope of this application. Understandably, all the technical solutions derived by a person skilled in the art through logical analysis, reasoning, or limited tests based on the technical solutions hereof still fall within the protection scope of the claims appended hereto. Therefore, the patent protection scope of this application is subject to the claims, and the specification and the accompanying drawings may be used for interpreting the claims.

## Claims

1. A cell balancing method, **characterized in that** the method comprises:
performing charge and discharge operations on battery cells in an energy storage system, and determining a first battery cell that first reaches a discharge cut-off voltage during the discharge operation, and a second battery cell that first reaches a charge cut-off voltage during the charge operation; and
performing a balancing process on the battery cells in the energy storage system in a case that the first battery cell is different from the second battery cell.

2. The method according to claim 1, wherein the method further comprises in a case that the first battery cell is identical to the second battery cell,
determining that the battery cells in the energy storage system reach a balanced state, or
stopping the balancing process on the battery cells in the energy storage system.

3. The method according to claim 1, wherein the performing a balancing process on the battery cells in the energy storage system comprises:
determining a target battery cell that meets a balancing condition in the energy storage system; and
performing the balancing process on the target battery cell.

4. The method according to claim 3, wherein, after performing the balancing process on the target battery cell, the method further comprises:
performing charge and discharge operations on the battery cells in the energy storage system, and determining a third battery cell that first reaches the discharge cut-off voltage during the discharge operation, and a fourth battery cell that first reaches the charge cut-off voltage during the charge operation; and
in a case that the third battery cell is identical to the fourth battery cell,
determining that the battery cells in the energy storage system reach a balanced state, or
stopping the balancing process on the battery cells in the energy storage system.

5. The method according to claim 3 or 4, wherein the determining a target battery cell that meets a balancing condition in the energy storage system comprises:
obtaining a cell voltage of each battery cell in the energy storage system, and a cell voltage difference between each battery cell and the first battery cell; and
determining that a battery cell meeting a condition is the target battery cell, wherein the condition is: the cell voltage is greater than a first voltage threshold, and the cell voltage difference is greater than a second voltage threshold.

6. The method according to claim 5, wherein the first voltage threshold is determined based on the charge cut-off voltage of the energy storage system, and the second voltage threshold is determined based on a maximum allowable voltage difference between the battery cells of the energy storage system.

7. The method according to claim 3, wherein the performing the balancing process on the target battery cell comprises:
determining a target discharge duration based on a preset discharge amount; and
discharging the target battery cell based on the target discharge duration.

8. The method according to claim 7, wherein the discharging the target battery cell based on the target discharge duration comprises:
discharging the target battery cell by using a balancing circuit disposed in the energy storage system, and starting timing from a beginning of the discharge; and
stopping discharging the target battery cell when a duration of the timing reaches the target discharge duration.

9. A cell balancing apparatus, wherein the apparatus comprises:
a first cell determining module, configured to perform charge and discharge operations on battery cells in an energy storage system, and determine a first battery cell that first reaches a discharge cut-off voltage during the discharge operation, and a second battery cell that first reaches a charge cut-off voltage during the charge operation; and
a balancing module, configured to perform a balancing process on the battery cells in the energy storage system in a case that the first battery cell is different from the second battery cell.

10. The apparatus according to claim 9, wherein the apparatus further comprises:
a first balancing stopping module, configured to in a case that the first battery cell is identical to the second battery cell,
determine, that the battery cells in the energy storage system reach a balanced state, or
stop the balancing process on the battery cells in the energy storage system.

11. The apparatus according to claim 9, wherein the balancing module is specifically configured to: determine a target battery cell that meets a balancing condition in the energy storage system; and perform the balancing process on the target battery cell.

12. The apparatus according to claim 9, wherein the apparatus further comprises:
a second cell determining module, configured to perform charge and discharge operations on the battery cells in the energy storage system, and determine a third battery cell that first reaches the discharge cut-off voltage during the discharge operation, and a fourth battery cell that first reaches the charge cut-off voltage during the charge operation; and
a second balancing stopping module, configured to in a case that the third battery cell is identical to the fourth battery cell,
determine, that the battery cells in the energy storage system reach a balanced state, or
stop the balancing process on the battery cells in the energy storage system.

13. An electronic device, comprising a memory and a processor, wherein the memory stores a computer program, and when executing the computer program, the processor implements steps of the method according to any one of claims 1 to 8.

14. A computer-readable storage medium on which a computer program is stored, wherein the computer program implements steps of the method according to any one of claims 1 to 8 when executed by a processor.
